# EUROPÄISCHE PATENTANMELDUNG

(11) **EP 1 124 060 A2**
(43) Veröffentlichungstag der Anmeldung: **16.08.2001**
(21) Anmeldenummer: 00203664.8
(22) Anmeldetag: 24.10.2000
(51) Int. Cl.: F03G 3/00

(54) **Schwerkraftanlage - Stromerzeugung mittels Gewichtsdruck**

(30) Priorität: 25.01.2000 WO PCT/IB00/00063
(71) Anmelder: Hartmann, Konstantin, 70378 Stuttgart (DE)
(72) Erfinder: Hartmann, Konstantin, 70378 Stuttgart (DE)

(57) **Zusammenfassung**

Schwerkraftanlage - Stromerzeugung mittels Gewichtsdruck durch: einen Zylinder, ein Schwergewicht, zwei Gewichtsvierecken, zwei Zylindervierecken, zwei Doppelecken, zwei Stahlkreisen, Zahnräder, Stahlwellen, Zahnwellen und Generatoren.
Der Zylinder kommt vom Schwergewicht und vom Gewicht der Schienen durch zwei Gewichtsvierecken, zwei Zylindervierecken, Stahlwellen, und Zahnräder in Drehung, dadurch dreht der Zylinder durch die Zahnwellen die Generatoren.

## Beschreibung

Schwerkraftanlage - Stromerzeugung mittels Gewichtsdruck durch: einen Zylinder, ein Schwergewicht, zwei Gewichtsvierecken, zwei Zylindervierecken, zwei Doppelecken, zwei Stahlkreisen, Stahlwellen, Zahnräder, Zahnwellen und Generatoren.

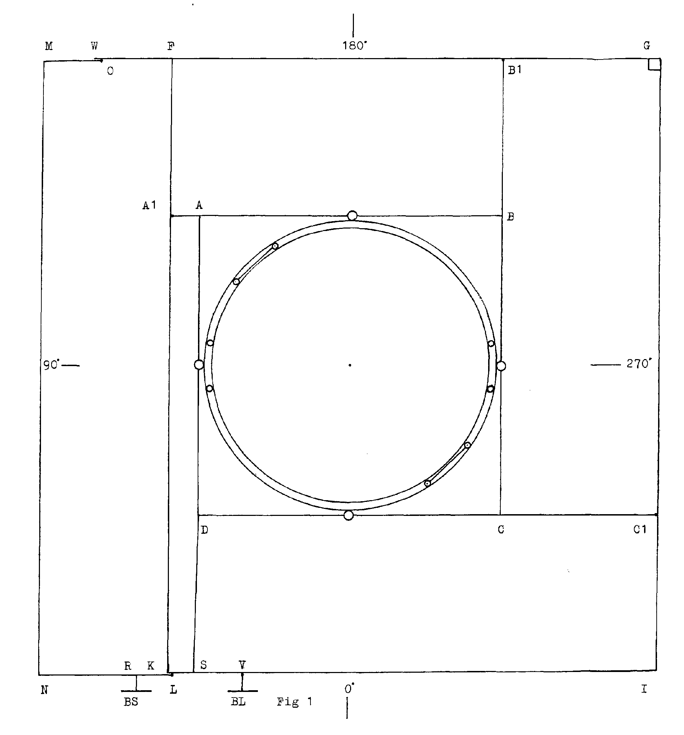

Es zeigt Fig. 1 und wird im folgenden näher beschrieben.

Der Zylinder, 10m Durchmesser, 10m Länge, 10 Stahlkreisen sind durch Schienen stabil verbunden und bilden den Zylinder.

Die 10 Stahlkreise haben Zahnoberfläche auf der Ausenseite und die Stahlkreise 1 und 10 haben Zahnoberfläche auch auf der Innenseite.

Der Zylinder stützt sich durch die Zahnoberfläche, auf die Zahnräder und drückt durch die Stahlkreisen 1 und 10, auf die Zahnwellen.

Die Gewichtsvierecken FG IK, 1 und 2 sind drehbar durch die Schienen: GG1, 111 und VV1 verbunden.

An die Gewichtsvierecken 1 und 2 sind: stabil die Eckseiten WF, das Schwergewicht an die Ecken: G und G1 und drehbar die Schienen DS angebracht.

Die Gewichtsvierecken 1 und 2 stützen sich durch die Schiene VV1, auf die Bodenlager und das Schergewicht drückt auf die Ecken G und G1, dadurch drücken die Gewichtsvierecken 1 und 2 drehbar: auf die Lager: A1, B1 und C1, längst der Eckseiten: A1A, B1B und CC1 auf die Ecken: A, B und C.

Das Gewicht der Schienen drückt durch die Gewichtsvierecken 1 und 2.

Die Zylindervierecken ABCD, 1 und 2 sind stabil durch die vier Stahlwellen verbunden.

An die Zylindervierecken 1 und 2 sind: stabil die Eckseiten: A1A, B1B, CC1, drehbar die Schienen DS und an die Eckseiten sind die Lager: A1, B1 und C1 angebracht.

Das Gewicht der Schienen drückt durch die Zylindervierecken 1 und 2: durch die Schienen DS und durch die Viereckseiten BC.

Die Doppelecken OMNL, 1 und 2 sind drehbar durch die Schienen: 001, MM1, NN1 und RR1 verbunden.

An die Doppelecken 1 und 2 sind: die Lager: O und 01, L und L1 und drehbar die stabilen Bodenschienen 1 und 2 angebracht.

Die Doppelecken 1 und 2 stützen sich auf die stabilen Bodenschienen und das Gewicht der Schienen drückt durch die Doppelecken 1 und 2, dadurch drücken die Doppellecken 1 und 2: durch die Lager L, auf die Eckseiten Kl und durch die Lager O, auf die Eckseiten WF, dadurch drückt das Gewicht der Schienen, durch die Gewichtsvierecken 1 und 2: durch die Eckseiten Gl, auf die Eckseiten Kl, durch die Lager B1, längst der Eckseiten B1B auf die Ecken B und durch die Lager O, auf die Doppelecken und das Gewicht der Schienen drückt durch die Doppelecken 1 und 2, dadurch drücken die Doppelecken 1 und 2: auf die stabilen Bodenschienen und durch die Lager L, durch die Eckseiten Kl, längst der Schienen DS.

Die Eckseiten GI, drücken auf die Eckseiten Kl, dadurch drücken die Eckseiten Kl, als Hebel: durch die Schiene VV1, auf die Bodenlager, gegen das Gewicht der Schienen, längst der Schienen DS und die Doppelecken 1 und 2 drücken, längst der Schienen DS, auf die Ecken D.

Auf die Zylindervierecken 1 und 2 drücken: die Gewichtsvierecken 1 und 2, durch die Lager: A1, B1, C1, längst der Eckseiten: A1A, B1B und CC1, auf die Ecken: A, B und C.

Das Gewicht der Schienen drückt: längst der Eckseiten B1B auf die Ecken B, längst der Schienen DS, auf die Ecken D und durch die Viereck Seiten BC, dadurch drücken die Zylindervierecken 1 und 2: drehbar durch die vier Stahlwellen.

Die vier Stahlwellen, auf jeder Stahlwelle drehen sich 10 Zahnräder.

Die Stahlkreisen 11 und 12, haben auf der Ausenseite Zahnoberfläche. Die Stahlkreisen 11 und 12 stützen sich, durch die Zahnoberfläche: auf die Zahnräder und drücken auf die Stahl wellen. Die Zahnräder drehen sich auf vier Stahlwellen.

Die vier Stahlwellen sind: 1 und 2 durch die Schienen 1 und 2 und 3 und 4 durch die Schienen 3 und 4, stabil verbunden.

Auf jeder Stahlwelle drehen sich zwei Zahnräder.

Das Gewicht der Stahlwellen drückt durch die Zahnräder.

Die Zylindervierecken 1 und 2 drücken drehbar: durch die vier Stahlwellen, durch die Zahnräder, durch die Zahnoberfläche, auf die 10 Zylinder Stahlkreisen, dadurch drückt der Zylinder, durch die Stahlkreisen 1 und 10: durch die Zahnoberfläche auf die vier Zahnwellen und durch die Zahnräder durch die Zahnoberfläche in entgegengesetzter Richtung auf die Stahlkreisen 11 und 12, dadurch drehen die Stahlkreisen: 1 und 11, 10 und 12 die vier Zahnwellen.

Im 90° Bereich drückt das Zylinder Gewicht und das Gewicht der Stahlwellen 1 und 2: durch die Stahlkreisen 1 und 10, durch die Zahnräder, durch die Stahlwelle 1, längst der Schienen 1 und 2, auf die Stahlwelle 2, durch die Zahnräder, durch die Zahnoberfläche, auf die Stahlkreisen 11 und 12 und das Gewicht der Stahlkreisen 11 und 12 drückt durch die Zahnoberfläche in Drehrichtung, auf die Zahnwellen.

Im 270° Bereich, drückt das Gewicht der Stahlkreisen 11 und 12 und das Gewicht der Stahlwellen 3 und 4: durch die Zahnräder, durch die Stahlwelle 3 längst der Schienen 3 und 4, auf die Stahlwelle 4, durch die Zahnräder auf die Stahlkreisen 1 und 10 und das Zylinder Gewicht drückt durch die Stahlkreisen 1 und 10, durch die Zahnoberfläche in Drehrichtung, auf die Zahnwellen.

Die Stahlkreisen: 1 und 11, 10 und 12 drehen durch die Zahnoberfläche, durch die Zahnwellen die Generatoren.

## Patentansprüche

1. Schwerkraftanlage - Stromerzeugung mittels Gewichtsdruck durch: einen Zylinder, ein Schwergewicht, zwei Gewichtsvierecken, zwei Zylindervierecken, zwei Doppelecken, zwei Stahlkreisen, Stahlwellen, Zahnräder, Zahnwellen und Generatoren,
dadurch gekennzeichnet,
das der Zylinder, vom Schwergewicht und vom Gewicht der Schienen, durch Gewichtsvierecken, Zylindervierecken, Doppelecken, Stahlwellen und Zahnräder in Drehung kommt, dadurch dreht der Zylinder durch die Zahnwellen, die Generatoren.

2. Stromerzeugung nach Patentanspruch 1,
dadurch gekennzeichnet,
dass das Schwergewicht, durch die Gewichtsvierecken drehbar drückt: auf die Lager: A1, B1, C1, längst der Eckseiten: A1A, B1B und CC1, auf die Ecken: A, B und C.

3. Stromerzeugung nach Patentanspruch 1,
dadurch gekennzeichnet,
dass das Gewicht der Schienen, durch die Gewichtsvierecken 1 und 2 und durch die Doppelecken 1 und 2, drückt; auf die Bodenschienen und längst der Schienen SD und durch die Eckseiten GI auf die Eckseiten Kl, dadurch drücken die Eckseiten Kl: auf die Bodenlager und längst der Schienen SD, auf die Ecken D.

4. Stromerzeugung nach Patentanspruch 1,
dadurch gekennzeichnet,
dass die Zylindervierecken 1 und 2, drehbar durch die vier Stahlwellen drücken: durch die Zahnräder, durch die Zahnoberfläche, auf den Zylinder.

5. Stromerzeugung nach Patentanspruch 1,
dadurch gekennzeichnet,
dass der Zylinder durch die Stahlkreisen 1 und 10 drückt: durch die Zahnoberfläche auf die Zahnwellen und durch die Zahnräder in entgegengesetzter Richtung auf die Stahlkreisen 11 und 12.

6. Stromerzeugung nach Patentanspruch 1,
dadurch gekennzeichnet,
dass im 90° Bereich, das Zylindergewicht und das Gewicht der Stahlwellen 1 und 2, durch die Zahnräder auf die Stahlkreisen 11 und 12 drücken und das Gewicht der Stahlkreisen 11 und 12 drückt durch die Zahnoberfläche in Drehrichtung, auf die Zahnwellen.

7. Stromerzeugung nach Patentanspruch 1,
dadurch gekennzeichnet,
dass im 270° Bereich, das Gewicht der Stahlkreisen 11 und 12 und das Gewicht der Stahlwellen 3 und 4, durch die Zahnräder auf die Stahlkreisen 1 und 10 drückt und das Zylindergewicht drückt durch die Stahlkreisen 1 und 10, durch die Zahnoberfläche in Drehrichtung auf die Zahnwellen.

8. Stromerzeugung nach Patentanspruch 1,
dadurch gekennzeichnet,
dass die Stahlkreisen 1 und 11, 10 und 12, durch die Zahnwellen, die Generatoren drehen.
